# EUROPÄISCHE PATENTSCHRIFT

(11) **EP 2 523 830 B1**
(45) Veröffentlichungstag und Bekanntmachung des Hinweises auf die Patenterteilung: **01.10.2014**
(21) Anmeldenummer: 11700535.5
(22) Anmeldetag: 13.01.2011
(51) Int. Cl.: B60R 11/04

(54) **VORRICHTUNG FÜR EIN KRAFTFAHRZEUG MIT EINER BEWEGBAR GELAGERTEN KAMERAEINHEIT SOWIE KRAFTFAHRZEUG**
DEVICE FOR A MOTOR VEHICLE COMPRISING A MOVABLY MOUNTED CAMERA UNIT AND MOTOR VEHICLE
DISPOSITIF POUR UN VÉHICULE À MOTEUR COMPRENANT UNE UNITÉ DE CAMÉRA MONTÉE DE MANIÈRE MOBILE AINSI QUE VÉHICULE À MOTEUR

(30) Priorität: 21.01.2010 DE 102010001108; 15.01.2010 DE 102010000955
(43) Veröffentlichungstag der Anmeldung: 21.11.2012
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Vogel, Andreas
(86) Internationale Anmeldenummer: PCT/EP2011/050403
(87) Internationale Veröffentlichungsnummer: WO 2011/086131

(56) Entgegenhaltungen:
- DE-A1- 10 204 764
- DE-A1-102006 023 103
- DE-A1-102006 039 192
- DE-A1-102008 010 966
- JP-A- 11 334 471

## Beschreibung

Die Erfindung betrifft eine Vorrichtung für ein Kraftfahrzeug, mit einer bewegbar gelagerten Kameraeinheit, die über eine Antriebseinheit in eine Ruheposition und in eine aktive Position bringbar ist, und einem Schutzelement, das in eine Schließstellung und in eine Offenstellung führbar ist, wobei in der Schließstellung des Schutzelementes die Kameraeinheit sich in ihrer Ruheposition von außen unzugänglich hinter dem Schutzelement und in der Offenstellung des Schutzelementes die Kameraeinheit sich in der aktiven Position zur Bilderfassung befindet. Ferner betrifft die Erfindung ein Kraftfahrzeug mit einer drehbar gelagerten Kameraeinheit.

Der Einsatz von Kameras beziehungsweise einer Kameraeinheit zur Fahrzeugumfelderfassung ist bereits bekannt. Derartige Kameraeinheiten kommen beispielsweise als Einpark- und/oder Rangierhilfen bei Kraftfahrzeugen zum Einsatz, um insbesondere die mit den konventionellen Spiegeln des Kraftfahrzeugs nicht einsehbaren Bereiche um das Auto herum zu erfassen.

In der EP 1 529 688 A1 ist eine Kameraanordnung für Kraftfahrzeuge mit einer Kameraeinheit zur Bilderfassung offenbart, wobei die Kameraeinheit in einer nicht aktiven Position von außen im Wesentlichen unzugänglich hinter einem schwenkbaren Schutzelement angeordnet ist. Bei dieser Vorrichtung ist die Kameraeinheit unmittelbar am Schutzelement befestigt. Nachteiligerweise hat sich gezeigt, dass die unmittelbare Anordnung der Kamera am Schutzelement störungsanfällig ist. Aufgrund von Witterungseinflüssen und Verschleißerscheinungen dichtet das Schutzelement nach einer gewissen Zeit nicht mehr zufriedenstellend ab, so dass die am Schutzelement befestigte Kameraeinheit gewissen Schmutz- und Feuchtigkeitsbelastungen ausgesetzt ist. Insbesondere die Objektive der Videokamera müssen deshalb häufig gereinigt werden. Außerdem kann die Kamera aufgrund ihrer direkten Anordnung an dem Schutzelement leicht durch Schläge oder Stöße auf das Schutzelement beschädigt werden.

Eine andere Vorrichtungen für ein Kraftfahrzeug mit einer bewegbar gelagerten Kameraeinheit ist aus der gattungsgemäßen DE 10 2006 048 373 A1 bekannt. Die Kameraeinheit ist über einen Motor in eine Ruheposition und in eine aktive Position bringbar. Ferner kann ein drehbar gelagertes Schutzelement in eine Schließstellung und in eine Offenstellung bewegt werden. Nachteilig bei dieser Vorrichtung ist, dass der Motor einen ersten Mechanismus zur Bewegung der Kameraeinheit und einen zweiten Mechanismus zur Bewegung des Schutzelementes aufweist. Dies macht die Vorrichtung bautechnisch kompliziert, das heißt, die Vorrichtung benötigt relativ viele Bauelemente, wodurch auch die Herstellung der Vorrichtung kostenintensiv ist.

Aufgabe der vorliegenden Erfindung ist es daher, eine einfache und kostengünstige Vorrichtung für ein Kraftfahrzeug mit einer bewegbar gelagerten Kameraeinheit zu schaffen, welche die oben genannten Nachteile vermeidet. Insbesondere soll die Vorrichtung wenige Bauelemente aufweisen und einen wirksamen Schutz der Kameraeinheit ermöglichen. Ferner soll ein Fahrzeug mit einer einfachen und kostengünstigen Vorrichtung mit einer bewegbar gelagerten Kameraeinheit geschaffen werden.

Diese Aufgaben werden erfindungsgemäß durch eine Vorrichtung für ein Kraftfahrzeug mit einer bewegbar gelagerten Kameraeinheit mit den Merkmalen gemäß dem unabhängigen Patentanspruch 1 sowie durch ein Kraftfahrzeug mit einer bewegbar gelagerten Kameraeinheit mit den Merkmalen gemäß Patentanspruch 15 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch eine Vorrichtung für ein Kraftfahrzeug mit einer bewegbar gelagerten Kameraeinheit, die über eine Antriebseinheit in eine Ruheposition und in eine aktive Position bringbar ist, und einem Schutzelement, das in eine Schließstellung und in eine Offenstellung führbar ist, wobei in der Schließstellung des Schutzelementes die Kameraeinheit sich in ihrer Ruheposition von außen unzugänglich hinter dem Schutzelement und in der Offenstellung des Schutzelementes die Kameraeinheit sich in der aktiven Position zur Bilderfassung befindet, und wobei die Kameraeinheit an einem bewegbar gelagerten Schwenkarm angeordnet ist, der die Antriebseinheit mit dem Schutzelement verbindet, wobei durch eine von der Antriebseinheit ausgelöste Bewegung des Schwenkarms das Schutzelement in die Schließstellung und in die Offenstellung sowie die Kameraeinheit in die Ruheposition und in die aktive Position führbar sind, gelöst.

Eine derartige Vorrichtung für ein Kraftfahrzeug mit einer bewegbar gelagerten Kameraeinheit ist einfach und kostengünstig ausgebildet und gewährleistet insbesondere in der Schließstellung des Schutzelementes einen sicheren Schutz der Kameraeinheit vor äußeren Einflüssen, insbesondere Stößen oder Schlägen.

Die erfindungsgemäße Vorrichtung ist an einem Kraftfahrzeug, insbesondere am hinteren Ende eines Kraftfahrzeuges, angeordnet. Beispielsweise kann die Vorrichtung in dem Fahrzeugrahmen, in einem Verkleidungselement, wie einem Stoßfänger, oder in der Kofferraumklappe des Kraftfahrzeuges angeordnet sein. Vorzugsweise ist die erfindungsgemäße Vorrichtung in einem Personenkraftwagen oder Lastkraftwagen vorgesehen. Es ist auch denkbar, dass die Vorrichtung in anderen Kraftfahrzeugen, beispielsweise in Nutzfahrzeugen, wie Baggern, Kränen, Raupen, etc., vorgesehen ist.

Bei der erfindungsgemäßen Vorrichtung ist die Kameraeinheit fahrzeugseitig angeordnet und befindet sich in ihrer Ruheposition in einer geschützten Lage hinter dem Schutzelement, das sich entsprechend in seiner Schließstellung befindet. Während der Bewegung des Schutzelementes in seine Offenstellung, aufgrund einer Bewegung des Schwenkarms, wird die Kameraeinheit gleichzeitig aus ihrer Ruheposition in die aktive Position überführt. In der aktiven Position kann die Kameraeinheit zur Bilderfassung eingesetzt werden. Dadurch, dass sowohl das Schutzelement, als auch die Kameraeinheit durch ein und denselben Schwenkarm definiert bewegt werden, können diese bei einer Bewegung nicht miteinander kollidieren.

Die Vorrichtung ist derart ausgebildet, dass durch eine von der Antriebseinheit ausgelöste Bewegung des Schwenkarms das Schutzelement sowohl von der Schließstellung in die Offenstellung als auch von der Offenstellung in die Schließstellung sowie die Kameraeinheit sowohl von der Ruheposition in die aktive Position als auch von der aktiven Position in die Ruheposition bewegt werden kann.

Die Kameraeinheit ist an einem bewegbar gelagerten Schwenkarm angeordnet, der die Antriebseinheit mit dem Schutzelement verbindet. Durch eine von der Antriebseinheit ausgelöste Bewegung des Schwenkarms wird sowohl das Schutzelement als auch die Kameraeinheit bewegt. Durch die kombinierte Bewegung des Schutzelementes und der Kameraeinheit ist die Vorrichtung konstruktiv einfach ausgebildet. Die Antriebseinheit bewegt lediglich einen einzigen Schwenkarm, um das Schutzelement aus der Schließstellung in die Offenstellung und gleichzeitig die Kamera aus der Ruheposition in die aktive Position zu führen. Dadurch, dass die Kameraeinheit an dem Schwenkarm und nicht an dem Schutzelement angeordnet ist, ist die Kameraeinheit vor äußeren Einflüssen, wie Schlägen oder Stößen, geschützt.

Dadurch, dass die Kamera an dem Schwenkarm angeordnet ist, der mit der Antriebseinheit wirkverbunden ist, das heißt der durch die Antriebseinheit bewegt werden kann, und gleichzeitig das Schutzelement an dem Schwenkarm angeordnet ist, können durch die Bewegung des Schwenkarms gleichzeitig das Schutzelement und die Kameraeinheit bewegt werden.

Der Schwenkarm ist nur durch die Antriebseinheit bewegbar, so dass dieser nicht manuell betätigt werden kann. Hierdurch sind das mit dem Schwenkarm verbundene Schutzelement sowie die an dem Schwenkarm angeordnete Kameraeinheit in jeder Lage sicher gehalten. Das heißt, wird der Schwenkarm nicht durch die Antriebseinheit bewegt, verharren das Schutzelement sowie die Kameraeinheit in einer stabilen Lage beziehungsweise einer festen Position, das heißt entweder in der Schließstellung oder der Offenstellung beziehungsweise entweder in der Ruheposition oder in der aktiven Position.

Das Schutzelement kann entweder bewegbar gelagert oder starr an dem Schwenkarm angeordnet sein. Ist das Schutzelement beispielsweise starr mit dem Schwenkarm verbunden, wird das Schutzelement bei einer Bewegung des Schwenkarms translatorisch bewegt. Bei einer bewegbaren Lagerung des Schutzelementes an dem Schwenkarm, kann das Schutzelement bei einer Bewegung des Schwenkarms beispielsweise um eine Achse gedreht beziehungsweise verschwenkt werden.

Gemäß einer bevorzugten Weiterentwicklung der Erfindung kann bei der Vorrichtung vorgesehen sein, dass das Schutzelement um eine erste Achse drehbar und/oder schwenkbar angeordnet und dass der Schwenkarm mit der Kameraeinheit um eine zweite Achse drehbar gelagert sind. In dieser Ausführungsvariante der Vorrichtung ist das Schutzelement nicht nur mit dem Schwenkarm verbunden, sondern zusätzlich an einer ersten Achse drehbar und/oder schwenkbar angeordnet. Hierdurch ist das Schutzelement, das auch als Schutzklappe bezeichnet werden kann, besonders sicher an der Vorrichtung beziehungsweise an einem Fahrzeug gehalten. Die erste Achse ist insbesondere als eine feststehende Achse ausgebildet. Der Schwenkarm, an dem die Kameraeinheit sitzt, ist um eine zweite Achse, vorzugsweise ebenfalls eine feststehende Achse, drehbar gelagert. Hierdurch kann der Schwenkarm durch die Antriebseinheit um die zweite Achse gedreht werden. Das heißt, durch eine Drehbewegung des Schwenkarms können die Kameraeinheit zwischen einer Ruheposition und einer aktiven Position beziehungsweise das Schutzelement zwischen einer Schließstellung und einer Offenstellung hin und her bewegt werden.

Vorteilhafterweise ist die Vorrichtung derart ausgebildet, dass der Schwenkarm mit dem Schutzelement derart in Wirkverbindung steht, dass in der Schließ- und/oder Offenstellung des Schutzelementes eine Bewegung des Schutzelementes durch Einwirkung einer von außen manuell ausgeübten Kraft auf das Schutzelement nicht möglich ist. Das heißt, sowohl in der Schließstellung, als auch in der Offenstellung des Schutzelementes ist eine Bewegung des Schutzelementes nicht möglich. Die Offenstellung sowie die Schließstellung des Schutzelementes stellen definierte stabile Positionen dar, die durch den Schwenkarm sowie die Verbindung des Schutzelementes an dem Schwenkarm vorgegeben sind. Durch die Art der Verbindung des Schutzelementes an dem Schwenkarm ist vorteilhafterweise sowohl die Offenstellung, als auch die Schließstellung des Schutzelementes begrenzt.

Die Antriebseinheit der Vorrichtung kann beispielsweise einen Stellantrieb aufweisen, über den der Schwenkarm bewegt werden kann. Beispielsweise kann der Schwenkarm durch eine Hubbewegung, insbesondere eine lineare Hubbewegung, des Stellantriebs hin und her bewegt werden, so dass dieser sich um die zweite Achse drehen kann. Die Antriebseinheit kann ferner einen Motor, insbesondere einen Elektromotor, aufweisen beziehungsweise als ein Motor, insbesondere als ein Elektromotor, ausgebildet sein. Ein Vorteil einer derartig ausgebildeten Antriebseinheit ist, dass der Motor selbsthemmend wirkt, so dass eine manuelle Bewegung des über den Schwenkarm mit dem Motor verbundenen Schutzelementes nicht möglich ist. Das heißt, wird beispielsweise an dem Schutzelement gezogen, verhindert der selbsthemmend ausgebildete Motor die Bewegung des Schutzelementes und damit die der Kameraeinheit. Somit stellt ein selbsthemmend ausgebildeter Motor einen wirksamen Diebstahlschutz dar.

In einer bevorzugten Ausführungsform der Vorrichtung ist vorgesehen, dass die Antriebseinheit eine um eine dritte Achse drehbar gelagerte Kurbel aufweist, dass an der Kurbel ein Führungselement angeordnet ist, das parallel zur dritten Achse verläuft und bei einer Drehbewegung der Kurbel kreisförmig um die dritte Achse führbar ist, und dass das Führungselement zur Bewegung des Schwenkarms mit dem Schwenkarm wirkverbunden ist. Durch eine derartige Ausgestaltung der Vorrichtung kann der Schwenkarm sicher und gleichförmig bewegt werden. Die Antriebseinheit kann die Kurbel wahlweise im Uhrzeigersinn oder entgegen des Uhrzeigersinns drehen. An der Kurbel ist ein Führungselement vorgesehen, dass beabstandet zu der Drehachse der dritten Achse an der Kurbel angeordnet ist, so dass das Führungselement bei einer Drehbewegung der Kurbel kreisförmig um die Drehachse der dritten Achse bewegt werden kann. Das Führungselement ist zur Bewegung des Schwenkarms mit dem Schwenkarm wirkverbunden. Das heißt, bei einer kreisförmigen beziehungsweise zumindest teilkreisförmigen Bewegung des Führungselementes kann der Schwenkarm um die zweite Achse gedreht werden.

Gemäß einer weiteren bevorzugten Weiterentwicklung der Erfindung kann bei der Vorrichtung vorgesehen sein, dass das der Antriebseinheit zugewandte Ende des Schwenkarms eine Kulissenführung zur Bewegung des Schwenkarms durch die Antriebseinheit, insbesondere zur Führung des Führungselementes der Kurbel, aufweist. Durch eine derartige Ausgestaltung des Schwenkarms kann das an der Kurbel der Antriebseinheit vorgesehene Führungselement durch Eingriff in die Kulissenführung des Schwenkarms diesen bei einer Drehung der Kurbel bewegen beziehungsweise um die zweite Achse drehen. Die Kulissenführung ist vorzugsweise eine Aussparung, insbesondere in Form einer Nut, in dem der Antriebseinheit zugewandten Ende des Schwenkarms. Dabei ist die Länge der Kulissenführung auf die Drehbewegung der Kurbel beziehungsweise des Führungselementes abgestimmt. Das Führungselement der Kurbel ist formschlüssig beziehungsweise annähernd formschlüssig in der Kulissenführung des Schwenkarms führbar beziehungsweise verschiebbar gelagert. Vorzugsweise ist das Führungselement der Kurbel als ein Nocken oder als ein Kulissenstein ausgebildet.

Das Schutzelement ist vorzugsweise ebenfalls beweglich an dem Schwenkarm angeordnet. Insbesondere ist eine Vorrichtung bevorzugt, bei der das dem Schutzelement zugewandte Ende des Schwenkarms ein Führungselement aufweist, das in einer Kulissenführung des Schutzelementes führbar gehalten ist. Das heißt, bei einer Bewegung, insbesondere einer Drehbewegung, des Schwenkarms, gleitet das an dem Schwenkarm angeordnete Führungselement in der Kulissenführung des Schutzelementes entlang, wobei das Schutzelement bewegt, insbesondere gedreht, wird. Das Führungselement des Schwenkarms ist vorzugsweise als ein an dem Schwenkarm hervorstehendes Element, insbesondere als ein Nocken oder ein Kulissenstein, ausgebildet. Dabei verläuft die Längsachse des Führungselementes des Schwenkarms vorzugsweise parallel zu der zweiten und ersten Achse der Vorrichtung.

Insbesondere ist die Vorrichtung derart ausgebildet, dass in der Schließstellung des Schutzelementes das Führungselement des Schwenkarms an das der ersten Achse abgewandte Ende der Kulissenführung des Schutzelementes anschlägt und dass in der Offenstellung des Schutzelementes das Führungselement des Schwenkarms an das der ersten Achse zugewandte Ende der Kulissenführung des Schutzelementes anschlägt. Hierdurch ist die Position der Schließstellung des Schutzelementes sowie die Position der Offenstellung des Schutzelementes definiert vorgegeben. Die Enden der Kulissenführung bilden somit jeweils einen Anschlag für das Führungselement des Schwenkarms und begrenzen dadurch sowohl die Bewegung, insbesondere die Drehung, des Schwenkarms als auch die des Schutzelementes.

Gemäß einer anderen bevorzugten Weiterentwicklung der Erfindung kann bei der Vorrichtung vorgesehen sein, dass die Kulissenführung des Schwenkarms geradlinig und/oder gebogen ausgebildet ist und/oder dass die Kulissenführung des Schutzelementes geradlinig und/oder gebogen ausgebildet ist. Vorzugsweise sind die Kulissenführung des Schwenkarms und die Kulissenführung des Schutzelementes dann geradlinig ausgebildet, wenn der Schwenkarm um eine Achse, d.h. die zweite Achse, drehbar gelagert ist. Bevorzugt ist ferner, dass die Kulissenführung des Schutzelementes geradlinig ausgebildet ist und die Längsachse der Kulissenführung des Schutzelementes auf oder annähernd auf die erste Achse gerichtet ist. Hierdurch ist gewährleistet, dass das Führungselement des Schwenkarms optimal in der Kulissenführung des Schutzelementes gleitet und es bei der Bewegung des Schwenkarms und des Schutzelementes nicht zu Verhakungen kommt.

Das Führungselement des Schwenkarms ist an dem dem Schutzelement zugewandten Ende des Schwenkarms angeordnet. Da die Kameraeinheit vorzugsweise an der Stirnseite dieses Endes des Schwenkarms angeordnet ist, ist das Führungselement vorzugsweise an der Seite dieses Endes des Schwenkarms vorgesehen. Die Kameraeinheit ist insbesondere über eine kraftschlüssige Verbindung an dem dem Schutzelement zugewandten Ende des Schwenkarms angeordnet. Die Kameraeinheit bildet daher vorteilhafterweise den stirnseitigen Abschluss des dem Schutzelement zugewandten Teils des Schwenkarms.

Gemäß einer weiteren bevorzugten Weiterentwicklung der Erfindung kann bei der Vorrichtung vorgesehen sein, dass das Führungselement der Kurbel drehbar an der Kurbel und/oder das Führungselement an dem dem Schutzelement zugewandten Ende des Schwenkarms drehbar an dem Schwenkarm angeordnet ist/sind. Hierdurch ist gewährleistet, dass das Führungselement des Schwenkarms und das Führungselement der Kurbel besonders sicher in den entsprechenden Kulissenführungn entlang gleiten können.

Der Schwenkarm der Vorrichtung kann verschiedenartig ausgebildet sein. Vorzugsweise ist der Schwenkarm abgewinkelt ausgebildet. Dabei kann der Schwenkarm einteilig oder mehrteilig, insbesondere zweiteilig, ausgebildet sein. Bei einer mehrteiligen Ausgestaltung des Schwenkarms sind die verschiedenen Teile des Schwenkarms im Betrieb der Vorrichtung fest miteinander verbunden. Vorteilhaft bei einer zwei- oder mehrteiligen Ausbildung des Schwenkarms ist, dass einzelne Teile leichter und kostengünstiger ausgetauscht werden können, als ein einteilig ausgebildeter Schwenkarm. Der Schwenkarm beziehungsweise die einzelnen Teile des Schwenkarms sind vorzugsweise aus Kunststoff oder Metall, insbesondere aus Leichtmetall, ausgebildet. Ein einteilig ausgebildeter Schwenkarm weist ein Loch, insbesondere in der Mitte beziehungsweise im Bereich der Mitte des Schwenkarms, auf, durch das der Schwenkarm an der zweiten Achse der Vorrichtung drehbar gelagert ist. Ist der Schwenkarm beispielsweise zweiteilig ausgebildet, weisen beide Teile beziehungsweise beide Schenkel des Schwenkarms jeweils ein Loch auf, die zur Lagerung der beiden Teile an der zweiten Achse dienen.

Bevorzugt ist das Schutzelement der Vorrichtung als ein Emblem ausgebildet beziehungsweise bevorzugt weist das Schutzelement der Vorrichtung ein Emblem auf. Ein Emblem im Sinne der Erfindung ist insbesondere ein Kennzeichen für eine Kraftfahrzeugmarke, insbesondere eine Automobilmarke. Dabei kann das Emblem zweidimensional oder dreidimensional ausgebildet sein.

Die erste und die zweite Achse der Vorrichtung sind vorzugsweise unbeweglich angeordnet. Dabei können sie an dem Kraftfahrzeug, insbesondere an einem Fahrzeugkarosserieteil, an einem Stoßfänger oder an der Kofferraumklappe des Kraftfahrzeuges angeordnet sein. Gemäß einer weiteren bevorzugten Weiterentwicklung der Erfindung kann bei der Vorrichtung vorgesehen sein, dass die erste Achse und die zweite Achse an einem Gehäuseelement der Vorrichtung angeordnet sind. Das Gehäuseelement der Vorrichtung ist vorzugsweise derart ausgebildet, dass es an einem Kraftfahrzeug, insbesondere an einem Fahrzeugkarosserieteil, an einem Stoßfänger oder an einer Kofferraumklappe eines Kraftfahrzeuges angeordnet werden kann. Dabei bildet das Gehäuseelement zumindest für einen Teil der Vorrichtung einen Schutzraum, der eine Öffnung aufweist, die durch das Schutzelement abgedeckt werden kann. Das heißt, in der Schließstellung des Schlusselementes deckt dieses die Öffnung vollständig ab, so dass die Vorrichtung, insbesondere der Schwenkarm, die Kameraeinheit sowie die Antriebseinheit geschützt sind. Die Antriebseinheit kann außerhalb des Gehäuseelementes, innerhalb des Kraftfahrzeuges, angeordnet sein. In diesem Fall weist das Gehäuseelement eine Aussparung, insbesondere einen Führungsschlitz, auf, durch den der Schwenkarm der Vorrichtung hindurchgeführt werden kann.

Bevorzugt ist, dass das Schutzelement in seiner Schließstellung die Öffnung des Gehäuseelementes der Vorrichtung abgedeckt und dass die Kameraeinheit in der aktiven Position durch die Öffnung des Gehäuseelementes der Vorrichtung hindurchgeführt ist.

Gemäß einem zweiten Aspekt der Erfindung wird die Aufgabe durch ein Kraftfahrzeug mit einer bewegbar gelagerten Kameraeinheit, gelöst, wobei das Kraftfahrzeug zumindest eine Vorrichtung gemäß dem ersten Aspekt der Erfindung aufweist. Vorzugsweise ist das Kraftfahrzeug als ein Lastkraftwagen oder ein Personenkraftwagen ausgebildet. Das Kraftfahrzeug kann ferner ein Boot beziehungsweise ein Schiff sein. Ebenso ist denkbar, dass das Kraftfahrzeug als ein Nutzfahrzeug, wie beispielsweise ein Bagger, eine Raupe, ein Kran, etc., ausgebildet ist. Insbesondere vorteilhaft ist, wenn das Kraftfahrzeug zwei oder mehrere derartige Vorrichtung aufweist. Dabei können mehrere Vorrichtungen derart miteinander gekoppelt sein, dass sie parallel zueinander betrieben werden können. Insbesondere kann vorgesehen sein, dass eine Antriebseinheit mehrere Schwenkarme mit entsprechend angeordneten Kameraeinheiten bewegt.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1:: eine Seitenansicht einer Vorrichtung für ein Kraftfahrzeug mit einer bewegbar gelagerten Kameraeinheit, die nach dem erfindungsgemäßen Konstruktionsprinzip ausgebildet ist, wobei sich die Kameraeinheit in der Ruheposition und das Schutzelement in der Schließstellung befinden,
- Fig. 2:: eine Seitenansicht der Vorrichtung gemäß Fig. 1, während der Bewegung der Kameraeinheit und des Schutzelementes,
- Fig. 3:: eine Seitenansicht der Vorrichtung gemäß Fig. 1, wobei sich die Kameraeinheit in der aktiven Position und das Schutzelement in der Offenstellung befinden.

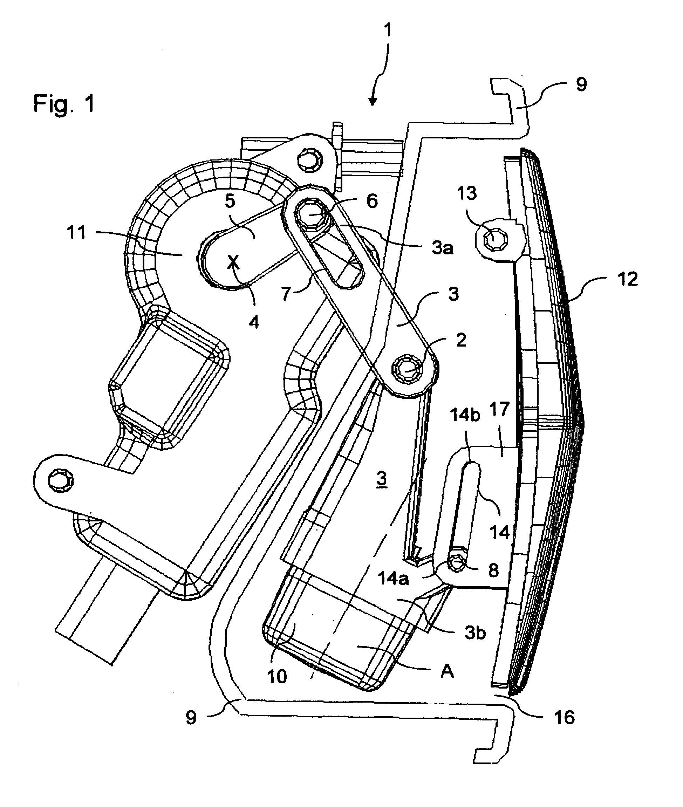

Elemente mit gleicher Funktion und Wirkungsweise sind in den Figuren 1 bis 3 jeweils mit denselben Bezugszeichen versehen.

Fig. 1 zeigt eine Seitenansicht einer Ausführungsvariante der Vorrichtung 1 für ein Kraftfahrzeug mit einer bewegbar gelagerten Kameraeinheit 10, die nach dem erfindungsgemäßen Konstruktionsprinzip ausgebildet ist, wobei sich die Kameraeinheit 10 in der Ruheposition A und das Schutzelement 12 in der Schließstellung befinden. Die Vorrichtung 1 weist eine Antriebseinheit 11 auf, der in Wirkverbindung mit einem Schwenkarm 3 der Vorrichtung 1 steht. Der Schwenkarm 3 verbindet die Antriebseinheit 11 mit dem Schutzelement 12. In dieser Ausführungsvariante der Vorrichtung 1 ist der Schwenkarm 3 zweiteilig ausgebildet, wobei beide Teile des Schwenkarms 3 fest miteinander verbunden sind. Der Schwenkarm 3 ist abgewinkelt ausgebildet und um eine zweite Achse 2 der Vorrichtung 1 drehbar gelagert angeordnet. Das der Antriebseinheit 11 zugewandte Ende des Schwenkarms 3, das sogenannte erst Ende 3a des Schwenkarms 3, weist eine Kulissenführung 7, in Form einer länglichen Aussparung, insbesondere einer länglichen Nut, auf. Die Antriebseinheit 11 weist eine um eine dritte Achse 4 drehbar gelagerte Kurbel 5 auf, an deren freien Ende ein Führungselement 6 angeordnet ist. Das Führungselement 6 der Kurbel 5 ist insbesondere als ein an der Kurbel 5 hervorstehender Nocken oder Kulissenstein ausgebildet. Die Kurbel 5 beziehungsweise das Führungselement 6 der Antriebseinheit 11 sind dabei derart mit dem Schwenkarm 3 verbunden, dass das Führungselement 6 in der Kulissenführung 7 des Schwenkarms 3 gleiten kann, so dass bei einer Bewegung der Kurbel 5 und damit des Führungselementes 6 der Schwenkarm 3 um die zweite Achse 2 gedreht werden kann. An dem dem Schutzelement 12 zugewandten Ende des Schwenkarms 3, das heißt dem sogenannten zweiten Ende 3b des Schwenkarms 3, ist die Kameraeinheit 10 angeordnet. In dieser Ausführungsvariante ist die Kammereinheit 10 stirnseitig an dem zweiten Ende 3b des Schenkarms 3 angeordnet. An der Seite des zweiten Endes 3b des Schwenkarms 3 weist der Schwenkarm 3 ein Führungselement 8 auf, das insbesondere als ein Nocken oder ein Kulissenstein ausgebildet ist. Dieses Führungselement 8 des Schwenkarms 3 steht in Wirkverbindung mit dem Schutzelement 12. Das heißt, das Führungselement 8 ist führbar in einer Kulissenführung 14 des Schutzelementes 12 gelagert. Bei einer Bewegung des Schwenkarms 3 gleitet das Führungselement 8 in der Kulissenführung 14 des Schutzelementes 12. Das Schutzelement 12 bildet den Abschluss der Vorrichtung 1. Das heißt, in der in der Fig. 1 dargestellten Schließstellung des Schutzelementes 12, deckt das Schutzelement 12 die restlichen Teile der Vorrichtung 1 vollständig ab, so dass diese sicher vor äußeren Einflüssen, wie beispielsweise Stößen oder Schlägen, geschützt sind. Die Vorrichtung 1 weist vorteilhafterweise ein Gehäuseelemente 9, in der zumindest Teile der Vorrichtung 1 angeordnet sind, auf. Hierdurch sind diese Teile, insbesondere der Schwenkarm 3 und die Kameraeinheit 10 geschützt angeordnet. Damit die Kameraeinheit 10 in eine aktive Position bewegt werden kann, weist das Gehäuseelement 9 eine Öffnung 16 auf. In der Schließstellung deckt das Schutzelement 12 die Öffnung 16 vollständig ab, so dass die Kameraeinheit 10 und die restlichen Bauteile der Vorrichtung 1 geschützt sind. In dieser Ausführungsvariante weist die Antriebseinheit 11 vorteilhafterweise einen Motor auf. Alternativ kann die Antriebseinheit 11 einen Stellantrieb aufweisen, über den der Schwenkarm 3 um die zweite Achse 2 gedreht werden kann.

In der Schließstellung des Schutzelementes 12 schlägt das Führungselement 8 des Schwenkarms 3 an das der ersten Achse 13 abgewandte Ende 14a der Kulissenführung 14 des Schutzelementes 12 an. Hierdurch ist die Schließstellung des Schutzelementes 12 definiert vorgegeben. Eine weitere Bewegung, insbesondere eine weitere Drehung, des Schutzelementes 12 wird durch den Anschlag des Führungselementes 8 des Schwenkarms 3 an dem der ersten Achse 13 abgewandten Ende 14a der Kulissenführung 14 verhindert. Das Schutzelement 12 ist um die erste Achse 13 drehbar gelagert. Die Kulissenführung 14 des Schutzelementes 12 ist vorzugsweise an einem Vorsprung 17 des Schutzelementes 12 vorgesehen. Dieser Vorsprung 17 ragt in Richtung des Schwenkarms 3 der Vorrichtung 1.

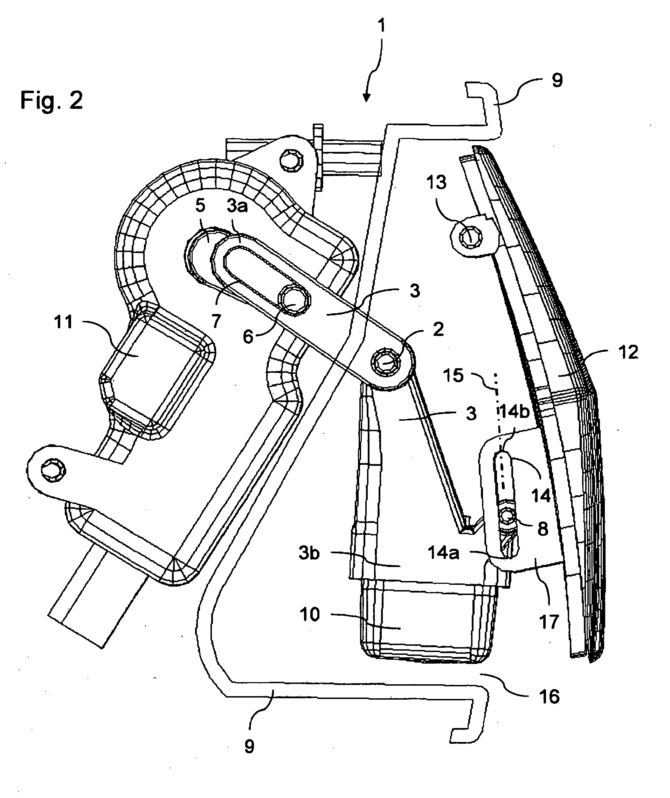

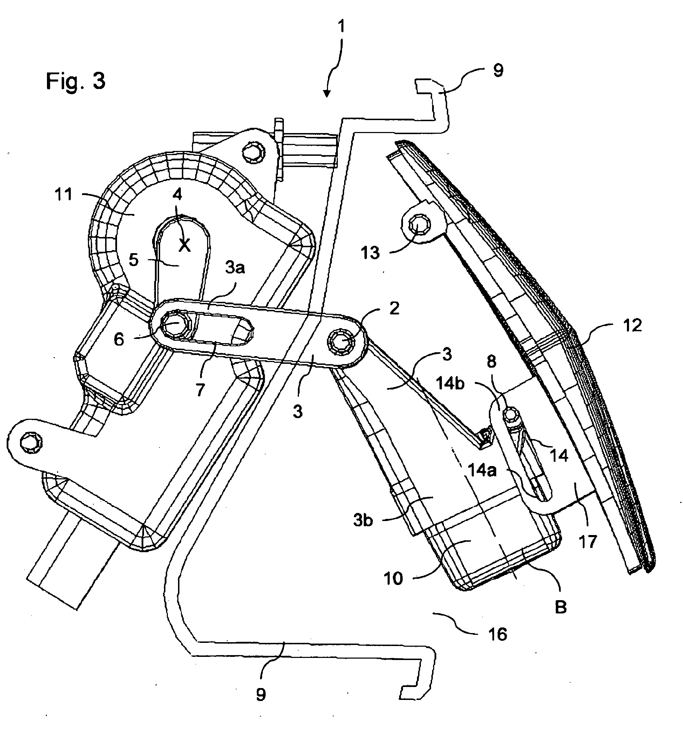

In der Fig. 2 ist die gleiche Ausführungsvariante der Vorrichtung gemäß Fig. 1 dargestellt, wobei sich die Kameraeinheit 10 in einer Position zwischen der Ruheposition A, wie in Fig. 1 dargestellt, und der aktiven Position B, wie in Fig. 3 dargestellt, befindet. Gleiches gilt für das Schutzelement 12. Dieses befindet sich in der Fig. 2 zwischen der Schließstellung, wie in Fig. 1 dargestellt, und der Offenstellung, wie in Fig. 3 dargestellt. Das Führungselement 6 der Kurbel 5 der Antriebseinheit 11 ist entlang der Kulissenführung 7 des Schwenkarms 3 in Richtung der zweiten Achse 2 geglitten. Der Schwenkarm 3 wird durch die Bewegung des Führungselementes 6 der Kurbel 5 um die zweite Achse 2 gedreht, so dass das Führungselement 8 des Schwenkarms 3 das Schutzelement 12 bewegt, insbesondere um die erste Achse 13 dreht. Dabei gleitet das Führungselement 8 des Schwenkarms 3, das insbesondere als Nocken oder als Kulissenstein ausgebildet ist, in der Kulissenführung 14 des Schutzelementes 12, wodurch dieses bewegt wird. Die Längsachse 15 der Kulissenführung 14 des Schutzelementes 12 ist dabei insbesondere derart ausgebildet, dass diese auf die erste Achse 13 gerichtet ist. Durch eine derartige Ausgestaltung des Schutzelementes 12 beziehungsweise des Schwenkarms 3 der Vorrichtung 1 ist gewährleistet, dass das Führungselement 6 der Kurbel 5 sowie das Führungselement 8 Schwenkarms 3 optimal in den entsprechenden Kulissenführungen 7 beziehungsweise 14 entlang gleiten kann.

In der Fig. 3 ist eine weitere Seitenansicht der Vorrichtung gemäß Fig. 1 dargestellt, wobei sich die Kameraeinheit 10 in der aktiven Position B und das Schutzelement 12 in der Offenstellung befinden. Die Kameraeinheit 10 ist derart weit verschwenkt, dass diese durch die Öffnung 16 hinausgeführt ist, das heißt in eine aktive Position B geführt ist. In dieser aktiven Position B kann die Kameraeinheit 10 zur Bilderfassung eingesetzt werden. Das Führungselement 8 des Schwenkarms 3 ist entlang der Kulissenführung 14 des Schutzelementes 12 derart weit entlang geglitten, bis eine weitere Bewegung des Schutzelementes 12 durch den Anschlag des Führungselementes 8 an dem der ersten Achse 13 zugewandten Ende 14b der Kulissenführung 14 begrenzt worden ist. Das heißt, die Kulissenführung 14, insbesondere das als Anschlag dienende Ende 14b der Kulissenführung 14, begrenzt eine weitere Drehung des Schutzelementes 12 um die erste Achse 13. Die spezielle Ausgestaltung und Anordnung der Kulissenführung 14 des Schutzelementes 12 sowie die Drehung der Schwenkachse 13 um die zweite Achse 2 sorgen dafür, dass das Schutzelement 12 in der Offenstellung einer sichere und stabile Position einnimmt. In dieser Position der Vorrichtung 1 schlägt das Führungselement 6 der Kurbel 5 an das der zweiten Achse 2 abgewandte Ende der Kulissenführung 7 des Schwenkarms 3 an. In der Offenstellung des Schutzelementes 12, in der sich die Kameraeinheit 10 in der aktiven Position befindet, verharrt die Kurbel 5 der Antriebseinheit 11. Wird die Kurbel 5 der Antriebseinheit 11 entgegen dem Uhrzeigersinn zurückgedreht, verdreht sich der Schwenkarm 3 im Uhrzeigersinn, so dass dadurch das Schutzelement 12 von der Offenstellung in eine Schließstellung, wie in Fig. 1 dargestellt, und gleichzeitig die Kameraeinheit 10 aus der aktiven Position B in die Ruheposition A, wie ebenfalls in Fig. 1 dargestellt, zurückgeführt werden können.

Vorteilhaft bei der derartigen Vorrichtung für ein Kraftfahrzeug mit einer bewegbar gelagerten Kameraeinheit ist, dass diese, im Vergleich zu den bekannten derartigen Vorrichtungen weniger konstruktive Bauelemente benötigt. So kann durch die spezielle Anordnung der Schwenkarms, der die Antriebseinheit und das Schutzelement miteinander verbindet, und der Kammerreinheit an dem Schwenkarm die Kammerreinheit gleichzeitig mit der Öffnung des Schutzelementes ausgefahren beziehungsweise mit der Schließung des Schutzelementes eingefahren werden. Zur Bewegung der Kameraeinheit und des Schutzelementes ist lediglich ein einziger Schwenkarm vorgesehen, der durch eine Antriebseinheit bewegt wird. Die spezielle Ausgestaltung beziehungsweise Anordnung des Führungselementes des Schwenkarms und der Kulissenführung des Schutzelementes sorgen dafür, dass die Vorrichtung und insbesondere die Kameraeinheit diebstahlgeschützt angeordnet sind. Sowohl in eingefahrener Position der Kameraeinheit, als auch in ausgefahrener Position der Kameraeinheit liegt eine stabile Lage der Kameraeinheit beziehungsweise des Schutzelementes vor. In der eingefahrenen Position der Kameraeinheit, das heißt der Ruheposition der Kameraeinheit, kann das geschlossene Schutzelement von außen nicht manuell bewegt werden, wodurch ein wirksamer Diebstahlschutz der Kameraeinheit gewährleistet ist.

### Bezugszeichenliste

- 1: Vorrichtung
- 2: zweite Achse
- 3: Schwenkarm
- 3a: erstes Ende des Schwenkarms
- 3b: zweites Ende des Schwenkarms
- 4: dritte Achse
- 5: Kurbel
- 6: Führungselement der Kurbel
- 7: Kulissenführung des Schwenkarms
- 8: Führungselement des Schwenkarms
- 9: Gehäuseelement
- 10: Kameraeinheit
- 11: Antriebseinheit
- 12: Schutzelement
- 13: erste Achse
- 14: Kulissenführung
- 14a: ersten Achse abgewandte Ende der Kulissenführung
- 14b: ersten Achse zugewandte Ende der Kulissenführung
- 15: Längsachse der Kulissenführung des Schutzelementes
- 16: Öffnung
- 17: Vorsprung des Schutzelementes

- A: Ruheposition der Kameraeinheit
- B: aktive Position der Kameraeinheit

## Patentansprüche

1. Vorrichtung (1) für ein Kraftfahrzeug, mit einer bewegbar gelagerten Kameraeinheit (10), die über eine Antriebseinheit (11) in eine Ruheposition (A) und in eine aktive Position (B) bringbar ist, und einem Schutzelement (12), das in eine Schließstellung und in eine Offenstellung führbar ist, wobei in der Schließstellung des Schutzelementes (12) die Kameraeinheit (10) sich in ihrer Ruheposition von außen unzugänglich hinter dem Schutzelement (12) und in der Offenstellung des Schutzelementes (12) die Kameraeinheit (10) sich in der aktiven Position zur Bilderfassung befindet,
**dadurch gekennzeichnet,**
**dass** die Kameraeinheit (10) an einem bewegbar gelagerten Schwenkarm (3) angeordnet ist, der die Antriebseinheit (11) mit dem Schutzelement (12) verbindet, wobei durch eine von der Antriebseinheit (11) ausgelöste Bewegung des Schwenkarms (3) das Schutzelement (12) in die Schließstellung und in die Offenstellung sowie die Kameraeinheit (10) in die Ruheposition und in die aktive Position führbar sind.

2. Vorrichtung (1) nach Anspruch 1, **dadurch gekennzeichnet, dass** das Schutzelement (12) um eine erste Achse (13) drehbar und/oder schwenkbar angeordnet und dass der Schwenkarm (3) mit der Kameraeinheit (10) um eine zweite Achse (2) drehbar gelagert sind.

3. Vorrichtung (1) nach wenigstens einem der vorhergehenden Ansprüche 1 oder 2, **dadurch gekennzeichnet, dass** der Schwenkarm (3) mit dem Schutzelement (12) derart in Wirkverbindung steht, dass in der Schließ- und/oder Offenstellung des Schutzelementes (12) eine Bewegung des Schutzelementes (12) durch Einwirkung einer von außen manuell ausgeübten Kraft auf das Schutzelement (12) nicht möglich ist.

4. Vorrichtung (1) nach wenigstens einem der vorhergehenden Ansprüche 1 bis 3, **dadurch gekennzeichnet, dass** die Antriebseinheit (11) eine um eine dritte Achse (4) drehbar gelagerte Kurbel (5) aufweist, dass an der Kurbel (5) ein Führungselement (6) angeordnet ist, das parallel zur dritten Achse (4) verläuft und bei einer Drehbewegung der Kurbel (5) kreisförmig um die dritte Achse (4) führbar ist, und dass das Führungselement (6) zur Bewegung des Schwenkarms (3) mit dem Schwenkarm (3) wirkverbunden ist.

5. Vorrichtung (1) nach wenigstens einem der vorhergehenden Ansprüche 1 bis 4, **dadurch gekennzeichnet, dass** das der Antriebseinheit (11) zugewandte Ende (3a) des Schwenkarms (3) eine Kulissenführung (7) zur Bewegung des Schwenkarms (3) durch die Antriebseinheit (11), insbesondere zur Führung des Führungselementes (6) der Kurbel (5), aufweist.

6. Vorrichtung (1) nach wenigstens einem der vorhergehenden Ansprüche 1 bis 5, **dadurch gekennzeichnet, dass** das dem Schutzelement (12) zugewandte Ende (3b) des Schwenkarms (3) ein Führungselement (8) aufweist, das in einer Kulissenführung (14) des Schutzelementes (12) führbar gehalten ist.

7. Vorrichtung (1) nach Anspruch 6, **dadurch gekennzeichnet, dass** in der Schließstellung des Schutzelementes (12) das Führungselement (8) des Schwenkarms (3) an das der ersten Achse (13) abgewandte Ende (14a) der Kulissenführung (14) des Schutzelementes (12) anschlägt und dass in der Offenstellung des Schutzelementes (12) das Führungselement (8) des Schwenkarms (3) an das der ersten Achse (13) zugewandte Ende (14b) der Kulissenführung (14) des Schutzelementes (12) anschlägt.

8. Vorrichtung (1) nach wenigstens einem der vorhergehenden Ansprüche 4 bis 7, **dadurch gekennzeichnet, dass** das Führungselement (6) der Kurbel (5) und/oder das Führungselement (8) des zweiten Endes (3b) des Schwenkarms (3) ein Kulissenstein oder ein Nocken ist.

9. Vorrichtung (1) nach wenigstens einem der vorhergehenden Ansprüche 4 bis 8, **dadurch gekennzeichnet, dass** die Kulissenführung (6) des Schwenkarms (3) geradlinig und/oder gebogen ausgebildet ist und/oder dass die Kulissenführung (14) des Schutzelementes (12) geradlinig und/oder gebogen ausgebildet ist.

10. Vorrichtung (1) nach wenigstens einem der vorhergehenden Ansprüche 6 bis 9, **dadurch gekennzeichnet, dass** die Kulissenführung (14) des Schutzelementes (12) geradlinig ausgebildet ist und die Längsachse (15) der Kulissenführung (14) des Schutzelementes (12) auf oder annähernd auf die erste Achse (13) gerichtet ist.

11. Vorrichtung (1) nach wenigstens einem der vorhergehenden Ansprüche 6 bis 10, **dadurch gekennzeichnet, dass** das Führungselement (8) des Schwenkarms (3) seitlich an dem zweiten Ende (3b) des Schwenkarms (3) angeordnet ist und/oder dass die Kameraeinheit (10) an dem dem Schutzelement (12) zugewandten Ende (3b) des Schwenkarms (3) angeordnet ist.

12. Vorrichtung (1) nach wenigstens einem der vorhergehenden Ansprüche 4 bis 11, **dadurch gekennzeichnet, dass** das Führungselement (6) der Kurbel (5) drehbar an der Kurbel (5) und/oder das Führungselement (8) an dem dem Schutzelement (12) zugewandten Ende (3b) des Schwenkarms (3) drehbar an dem Schwenkarm (3) angeordnet ist/sind.

13. Vorrichtung (1) nach wenigstens einem der vorhergehenden Ansprüche 1 bis 12, **dadurch gekennzeichnet, dass** der Schwenkarm (3) ein- oder mehrteilig ausgebildet ist und/oder dass der Schwenkarm (3) abgewinkelt ausgebildet ist.

14. Vorrichtung (1) nach wenigstens einem der vorhergehenden Ansprüche 1 bis 13, **dadurch gekennzeichnet, dass** das Schutzelement (12) ein Emblem aufweist und/oder dass die erste Achse (13) und die zweite Achse (2) an einem Gehäuseelement (9) der Vorrichtung (1) angeordnet sind.

15. Kraftfahrzeug mit einer bewegbar gelagerten Kameraeinheit, **dadurch gekennzeichnet, dass** das Fahrzeug zumindest eine Vorrichtung (1) nach wenigstens einem der vorhergehenden Ansprüche 1 bis 14 aufweist.

## Claims

1. A device (1) for a motor vehicle, with a movably mounted camera unit (10), which is able to be brought into a resting position (A) and into an active position (B) by means of a drive unit (11), and with a protective element (12), which is able to be guided into a closed position and into an open position, wherein in the closed position of the protective element (12) the camera unit (10) is situated in its resting position, inaccessible from the exterior, behind the protective element (12), and in the open position of the protective element (12) the camera unit (10) is situated in the active position for image capture,
**characterized in that**
the camera unit (10) is arranged on a movably mounted pivot arm (3), which connects the drive unit (11) with the protective element (12), wherein by a movement of the pivot arm (3) triggered by the drive unit (11), the protective element (12) is able to be guided into the closed position and into the open position and the camera unit (10) is able to be guided into the resting position and into the active position.

2. The device (1) according to claim 1, **characterized in that** the protective element (12) is arranged rotatably and/or pivotably about a first axis (13) and that the pivot arm (3) with the camera unit (10) are rotatably mounted about a second axis (2).

3. The device (1) according to at least one of the preceding claims 1 or 2, **characterized in that** the pivot arm (3) is in operative connection with the protective element (12) such that in the closed position and/or open position of the protective element (12) a movement of the protective element (12) through the action of a force, exerted manually from the exterior onto the protective element (12), is not possible.

4. The device (1) according to at least one of the preceding claims 1 to 3, **characterized in that** the drive unit (11) has a crank (5) rotatably mounted about a third axis (4), that on the crank (5) a guide element (6) is arranged, which runs parallel to the third axis (4) and, on a rotational movement of the crank (5), is able to be guided in a circular manner about the third axis (4), and that the guide element (6) is operatively connected with the pivot arm (3) for the movement of the pivot arm (3).

5. The device (1) according to at least one of the preceding claims 1 to 4, **characterized in that** the end (3a) of the pivot arm (3) facing the drive unit (11) has a link guide (7) for moving the pivot arm (3) by the drive unit (11), in particular for guiding the guide element (6) of the crank (5).

6. The device (1) according to at least one of the preceding claims 1 to 5, **characterized in that** the end (3b) of the pivot arm (3) facing the protective element (12) has a guide element (8) which is held so as to be able to be guided in a link guide (14) of the protective element (12).

7. The device (1) according to claim 6, **characterized in that** in the closed position of the protective element (12) the guide element (8) of the pivot arm (3) strikes against the end (14a) of the link guide (14) of the protective element (12) facing away from the first axis (13) and that in the open position of the protective element (12) the guide element (8) of the pivot arm (3) strikes against the end (14b) of the link guide (14) of the protective element (12) facing the first axis (13).

8. The device (1) according to at least one of the preceding claims 4 to 7, **characterized in that** the guide element (6) of the crank (5) and/or the guide element (8) of the second end (3b) of the pivot arm (3) is a sliding block or a cam.

9. The device (1) according to at least one of the preceding claims 4 to 8, **characterized in that** the link guide (7) of the pivot arm (3) is configured in a straight and/or bent manner and/or that the link guide (14) of the protective element (12) is configured in a straight and/or bent manner.

10. The device (1) according to at least one of the preceding claims 6 to 9, **characterized in that** the link guide (14) of the protective element (12) is configured in a straight manner and the longitudinal axis (15) of the link guide (14) of the protective element (12) is directed to or approximately to the first axis (13).

11. The device (1) according to at least one of the preceding claims 6 to 10, **characterized in that** the guide element (8) of the pivot arm (3) is arranged laterally at the second end (3b) of the pivot arm (3) and/or that the camera unit (10) is arranged at the end (3b) of the pivot arm (3) facing the protective element (12).

12. The device (1) according to at least one of the preceding claims 4 to 11, **characterized in that** the guide element (6) of the crank (5) is arranged rotatably on the crank (5) and/or the guide element (8) is arranged rotatably on the pivot arm (3) at the end (3b) of the pivot arm (3) facing the protective element (12).

13. The device (1) according to at least one of the preceding claims 1 to 12, **characterized in that** the pivot arm (3) is constructed in one or several parts and/or that the pivot arm (3) is constructed in an angled manner.

14. The device (1) according to at least one of the preceding claims 1 to 13, **characterized in that** the protective element (12) has an emblem and/or that the first axis (13) and the second axis (2) are arranged on a housing element (9) of the device (1).

15. A motor vehicle with a movably mounted camera unit, **characterized in that** the vehicle has at least one device (1) according to at least one of the preceding claims 1 to 14.

## Revendications

1. Dispositif (1) dévolu à un véhicule automobile, comprenant une unité (10) à caméra montée avec mobilité et pouvant être amenée, par l'intermédiaire d'une unité d'entraînement (11), à un emplacement de repos (A) et à un emplacement opérant (B) ; et un élément de protection (12) pouvant être transféré à une position de fermeture et à une position d'ouverture, sachant que, dans la position de fermeture de l'élément de protection (12), l'unité (10) à caméra occupe son emplacement de repos derrière ledit élément de protection (12), avec inaccessibilité de l'extérieur, et que, dans la position d'ouverture dudit élément de protection (12), ladite unité (10) à caméra occupe l'emplacement opérant en vue de capturer des images,
**caractérisé par le fait**
**que** l'unité (10) à caméra est installée sur un bras pivotant (3) qui est monté avec mobilité et relie l'unité d'entraînement (11) à l'élément de protection (12), un mouvement dudit bras pivotant (3), déclenché par ladite unité d'entraînement (11), permettant de transférer ledit élément de protection (12) à la position de fermeture et à la position d'ouverture, et ladite unité (10) à caméra à l'emplacement de repos et à l'emplacement opérant.

2. Dispositif (1) selon la revendication 1, **caractérisé par le fait que** l'élément de protection (12) est agencé à rotation et/ou à pivotement autour d'un premier axe (13) ; et **par le fait que** le bras pivotant (3), et l'unité (10) à caméra, sont montés conjointement à rotation autour d'un deuxième axe (2).

3. Dispositif (1) selon au moins l'une des revendications 1 ou 2 précédentes, **caractérisé par le fait que** le bras pivotant (3) est en liaison interactive avec l'élément de protection (12) d'une manière propre à empêcher, dans la position de fermeture et/ou d'ouverture dudit élément de protection (12), un mouvement de l'élément de protection (12) sous l'action d'une force appliquée manuellement, de l'extérieur, audit élément de protection (12).

4. Dispositif (1) selon au moins l'une des revendications 1 à 3 précédentes, **caractérisé par le fait que** l'unité d'entraînement (11) est dotée d'une manivelle (5) montée à rotation autour d'un troisième axe (4) ; **par le fait qu'**un élément de guidage (6), implanté sur ladite manivelle (5), s'étend parallèlement au troisième axe (4) et peut être guidé, lors d'un mouvement rotatoire de ladite manivelle (5), en décrivant un cercle autour dudit troisième axe (4) ; et **par le fait que** ledit élément de guidage (6) est en liaison interactive avec le bras pivotant (3), en vue de mouvoir ledit bras pivotant (3).

5. Dispositif (1) selon au moins l'une des reven
dications 1 à 4 précédentes, **caractérisé par le fait que** l'extrémité (3a) du bras pivotant (3), tournée vers l'unité d'entraînement (11), présente un guide coulissant (7) affecté à la mise en mouvement dudit bras pivotant (3) par l'intermédiaire de ladite unité d'entraînement (11), en particulier au guidage de l'élément de guidage (6) de la manivelle (5).

6. Dispositif (1) selon au moins l'une des revendications 1 à 5 précédentes, **caractérisé par le fait que** l'extrémité (3b) du bras pivotant (3), tournée vers l'élément de protection (12), présente un élément de guidage (8) retenu, avec faculté de guidage, dans un guide coulissant (14) dudit élément de protection (12).

7. Dispositif (1) selon la revendication 6, **caractérisé par le fait que**, dans la position de fermeture de l'élément de protection (12), l'élément de guidage (8) du bras pivotant (3) vient en butée contre l'extrémité (14a) du guide coulissant (14) dudit élément de protection (12) qui est tournée à l'opposé du premier axe (13) ; et **par le fait que**, dans la position d'ouverture dudit élément de protection (12), ledit élément de guidage (8) dudit bras pivotant (3) vient en butée contre l'extrémité (14b) dudit guide coulissant (14) dudit élément de protection (12) qui est tournée vers ledit du premier axe (13).

8. Dispositif (1) selon au moins l'une des revendications 4 à 7 précédentes, **caractérisé par le fait que** l'élément de guidage (6) de la manivelle (5), et/ou l'élément de guidage (8) de la seconde extrémité (3b) du bras pivotant (3), se présente(nt) comme un bloc coulissant ou comme une came.

9. Dispositif (1) selon au moins l'une des revendications 4 à 8 précédentes, **caractérisé par le fait que** le guide coulissant (7) du bras pivotant (3) est de réalisation rectiligne et/ou courbe ; et/ou **par le fait que** le guide coulissant (14) de l'élément de protection (12) est de réalisation rectiligne et/ou courbe.

10. Dispositif (1) selon au moins l'une des revendications 6 à 9 précédentes, **caractérisé par le fait que** le guide coulissant (14) de l'élément de protection (12) est de réalisation rectiligne, et l'axe longitudinal (15) dudit guide coulissant (14) dudit élément de protection (12) est dirigé vers, ou approximativement vers le premier axe (13).

11. Dispositif (1) selon au moins l'une des revendications 6 à 10 précédentes, **caractérisé par le fait que** l'élément de guidage (8) du bras pivotant (3) occupe une position latérale sur la seconde extrémité (3b) dudit bras pivotant (3) ; et/ou **par le fait que** l'unité (10) à caméra est située à l'extrémité (3b) dudit bras pivotant (3) qui est tournée vers l'élément de protection (12).

12. Dispositif (1) selon au moins l'une des revendications 4 à 11 précédentes, **caractérisé par le fait que** l'élément de guidage (6) de la manivelle (5) est monté à rotation sur ladite manivelle (5), et/ou l'élément de guidage (8) est monté à rotation, sur le bras pivotant (3), à l'extrémité (3b) dudit bras pivotant (3) qui est tournée vers l'élément de protection (12).

13. Dispositif (1) selon au moins l'une des revendications 1 à 12 précédentes, **caractérisé par le fait que** le bras pivotant (3) est réalisé en une ou plusieurs partie(s) ; et/ou par **le fait que** ledit bras pivotant (3) est de réalisation coudée.

14. Dispositif (1) selon au moins l'une des revendications 1 à 13 précédentes, **caractérisé par le fait que** l'élément de protection (12) comporte un emblème ; et/ou **par le fait que** le premier axe (13) et le deuxième axe (2) se trouvent sur un élément (9) formant carter dudit dispositif (1).

15. Véhicule automobile équipé d'une unité à caméra montée avec mobilité, **caractérisé par le fait que** ledit véhicule présente au moins un dispositif (1) conforme à au moins l'une des revendications 1 à 14 précédentes.
